# EUROPEAN PATENT SPECIFICATION

(11) **EP 3 144 945 B1**
(45) Date of publication and mention of the grant of the patent: **13.10.2021**
(21) Application number: 15793331.8
(22) Date of filing: 14.04.2015
(51) Int. Cl.: H02J 7/35, H01G 9/20

(54) **LIGHT POWER GENERATION APPARATUS**
VORRICHTUNG ZUR LICHTENERGIEERZEUGUNG
APPAREIL DE GÉNÉRATION D'ÉNERGIE PHOTOÉLECTRIQUE

(30) Priority: 12.05.2014 JP 2014099034
(43) Date of publication of application: 22.03.2017
(73) Proprietor: Sharp Kabushiki Kaisha, Osaka 5908522 (JP)
(72) Inventor: KOMIYA, Ryoichi, Sakai City Osaka 590-8522 (JP); FUKUI, Atsushi, Sakai City Osaka 590-8522 (JP); YAMANAKA, Ryohsuke, Sakai City Osaka 590-8522 (JP)
(74) Representative: Müller Hoffmann & Partner
(86) International application number: PCT/JP2015/061449
(87) International publication number: WO 2015/174188

(56) References cited:
- EP-A1- 1 505 659
- WO-A1-2011/070547
- WO-A1-2011/153106
- WO-A1-2013/080835
- DE-A1- 3 729 000
- JP-A- 2001 141 851
- JP-A- 2011 078 215
- JP-A- 2012 078 090
- JP-A- 2012 078 090
- JP-U- S6 268 256
- JP-U- S53 112 380
- US-A1- 2010 116 325
- JINGBIN HAN ET AL: "ZnO nanotube-based dye-sensitized solar cell and its application in self-powered devices;ZnO nanotube-based dye-sensitized solar cell and its application in self-powered devices", NANOTECHNOLOGY, INSTITUTE OF PHYSICS PUBLISHING, GB, vol. 21, no. 40, 10 September 2010 (2010-09-10), page 405203, XP020198537, ISSN: 0957-4484, DOI: 10.1088/0957-4484/21/40/405203

## Description

### Technical Field

The present invention relates to a photovoltaic power generation apparatus that converts light into power.

### Background Art

As a photovoltaic power generation apparatus, a dye-sensitized solar cell (DSC) has been known. The DSC has a characteristic that a ratio of generation of power for faint light and scattered light is high. With use of the DSC or the like, a photovoltaic power generation apparatus has been considered to be installed also indoors or semi-indoors where the photovoltaic power generation apparatus had not been installed conventionally.

However, a power generation amount of the photovoltaic power generation apparatus becomes unstable indoors, semi-indoors, and the like differently from being installed outdoors such as on a roof. This is because a quantity of light received by the photovoltaic power generation apparatus greatly varies due to an obstacle around the photovoltaic power generation apparatus, a person passing in front of the photovoltaic power generation apparatus, or the like.

The photovoltaic power generation apparatus is generally controlled so that an optimum power generation amount is obtained, that is, power to be generated becomes maximum. At this time, maximum power point tracking (MPPT) control or the like is used.

PTL 1 discloses a solar photovoltaic power generation apparatus for reducing a power loss by a control unit that controls an operating point of a DSC.

PTL 2 discloses a charging control device that includes a charging converter and a controlling CPU in order to charge a rechargeable battery by adjusting an output voltage of a solar cell, and a solar photovoltaic power generation system.

PTL 3 discloses an air conditioner including a DSC.

PTL 4 discloses a portable article including a DSC.

PTL 5 discloses a solar cell control system that controls a solar cell at an almost maximum efficiency point by connecting an inverter.

PTL 6 discloses a charger to which a solar cell is connected as an input power supply.

PTL 7 discloses a circuit device that drives a voltage conversion circuit (step-up circuit) so that output efficiency of a solar cell is held high.

PTL 8 discloses a solar cell system for efficiently charging a secondary cell with an output of a solar cell while the output of the solar cell is reduced.

PTL 9 discloses an operation control system of a water electrolysis apparatus that uses a solar cell as a power supply, in which current output by the solar cell is charged into a storage battery when the current exceeding limit current for a water electrolyzer.

### Citation List

### Patent Literature

PTL 1: Japanese Unexamined Patent Application Publication No. 2009-123393 (Publication date: June 4, 2009)
PTL 2: Japanese Unexamined Patent Application Publication No. 2013-115993 (Publication date: June 10, 2013)
PTL 3: Japanese Unexamined Patent Application Publication No. 2006-29705 (Publication date: February 2, 2006)
PTL 4: Japanese Unexamined Patent Application Publication No. 2008-204677 (Publication date: September 4, 2008)
PTL 5: Japanese Unexamined Patent Application Publication No. 8-95655 (Publication date: April 12, 1996)
PTL 6: Japanese Unexamined Patent Application Publication No. 2010-206911 (Publication date: September 16, 2010)
PTL 7: Japanese Unexamined Patent Application Publication No. 2011-186583 (Publication date: September 22, 2011)
PTL 8: Japanese Unexamined Patent Application Publication No. 2011-41378 (Publication date: February 24, 2011)
PTL 9: Japanese Unexamined Patent Application Publication No. 7-331474 (Publication date: December 19, 1995)

JP 2012 078090 A discloses a current and voltage detection circuit that detects a current and a voltage in a power supply device or a charge control device.

WO 2013/080835 A1 discloses a charge control device, a photovoltaic power generation system, and a charge control method that enable more efficient charging.

The paper by Jingbin Han et al.: "ZnO nanotube-based dye-sensitized solar cell and its application in self-powered devices", in NANOTECHNOLOGY, INSTITUTE OF PHYSICS PUBLISHING, GB, vol. 21, no. 40, 10 September 2010, page 405203, XP020198537, ISSN: 0957-4484, DOI: 10.1088/0957-4484/21/40/405203 teaches a device with a humidity sensor powered by dye-sensitized solar cells exhibiting a step-wise voltage drop as a function of the relative humidity. That voltage might be outside a range of optimum voltages.

From US 2010/116325 A1, a photovoltaic solar panel is known the output of which can be AC. The panel can comprise a hermetically sealed space which comprises a first sheet, multiple energy conversion cells divided into groups, an access matrix and a second sheet. A power module can be connected to individual energy conversion cells or groups of the cells to optimize the power generation efficiency.

### Summary of Invention

### Technical Problem

However, the conventional photovoltaic power generation apparatus aiming to simply obtain an optimum power generation amount has a problem that a device does not operate stably and fails when the device operates by generated power.

This is because when the light received by the photovoltaic power generation apparatus varies as a result of the generating power being simply maximized, power variation also becomes large and may fall outside a normal operation range of the device. When the received light varies rapidly, sufficient control therefor becomes difficult and an output of a solar cell becomes unstable. In MPPT control, when a part of the solar cell is put in a shadow, a plurality of peaks are generated in an IV curve (a curve indicating a relation between voltage and current output by the solar cell) and an erroneous operating point may be set.

Further, as in PTLs 1 and 2, for adjusting an output voltage of a solar cell to a desired output voltage, a control circuit is required. Even when a configuration for suppressing power variation is added to the conventional photovoltaic power generation apparatus disclosed in PTLs 1 to 9, a new circuit device or the like is required, so that it is inevitable that the photovoltaic power generation device is complicated.

In view of the aforementioned problems, the invention aims to achieve, with a simple configuration, a stable operation and malfunction prevention of a device operating with power generated by a photovoltaic power generation apparatus.

### Solution to Problem

The above problems are solved by the subject-matter of the independent claim.

In order to solve the aforementioned problems, according to the invention, a photovoltaic power generation apparatus is disclosed as recited in claim 1. Further embodiments are recited in the dependent claims.

### Advantageous Effects of Invention

According to an aspect of the invention, it is possible to achieve an effect that variation in the operating point of the photovoltaic power generation unit is able to be suppressed without requiring a control circuit that adjusts output voltage of the photovoltaic power generation unit. Accordingly, even when the photovoltaic power generation apparatus is installed in a place where the light received by the photovoltaic power generation unit varies, the device is able to operate more stably as compared to a conventional device. Further, it is possible to suppress power output by the power generation unit falling outside a normal operation range of the device, thus making it also possible to prevent a malfunction of the device.

### Brief Description of Drawings

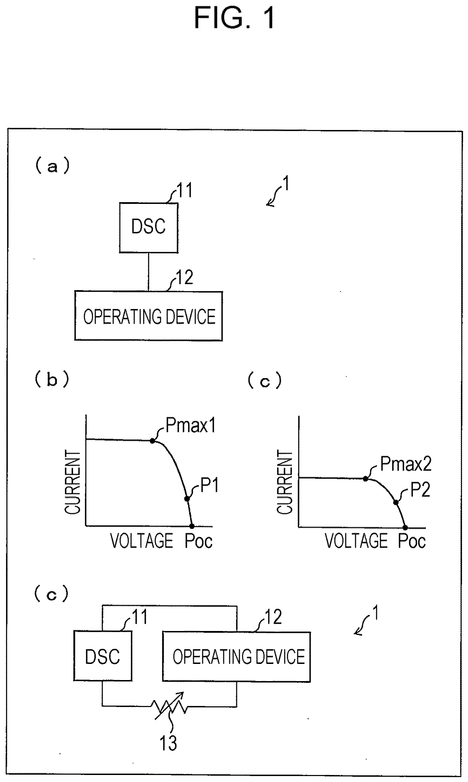

[Fig. 1] Fig. 1 illustrates a configuration of a photovoltaic power generation apparatus of Embodiment 1, in which (a) is a block diagram illustrating a schematic configuration of the photovoltaic power generation apparatus, (b) is a graph indicating a relation between voltage and current output by a dye-sensitized solar cell of the photovoltaic power generation apparatus when energy of light received by the dye-sensitized solar cell is large, (c) is a graph indicating the relation when the energy is small, and (d) is a block diagram illustrating a configuration of the photovoltaic power generation apparatus including a variable resistance.

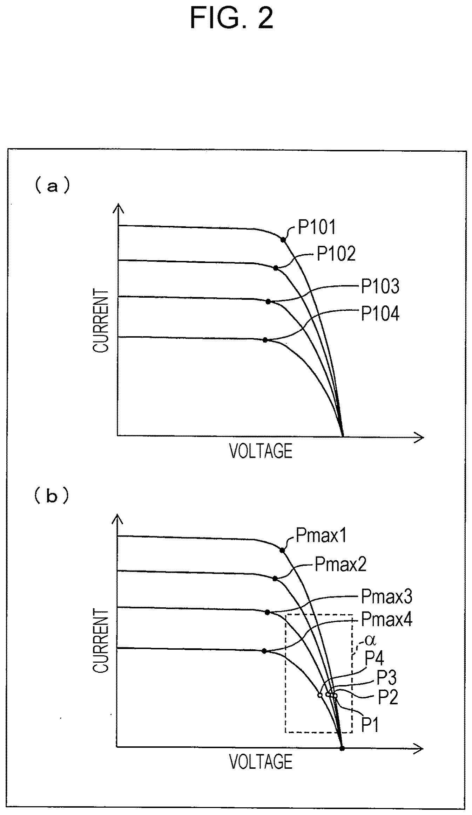

[Fig. 2] Fig. 2 is a graph comparing variations of operating points in accordance with variation of energy of light received by a dye-sensitized solar cell, in which (a) illustrates variation states of optimum operating points of a conventional dye-sensitized solar cell and (b) illustrates variation states of operating points of the dye-sensitized solar cell of the photovoltaic power generation apparatus illustrated in Fig. 1.

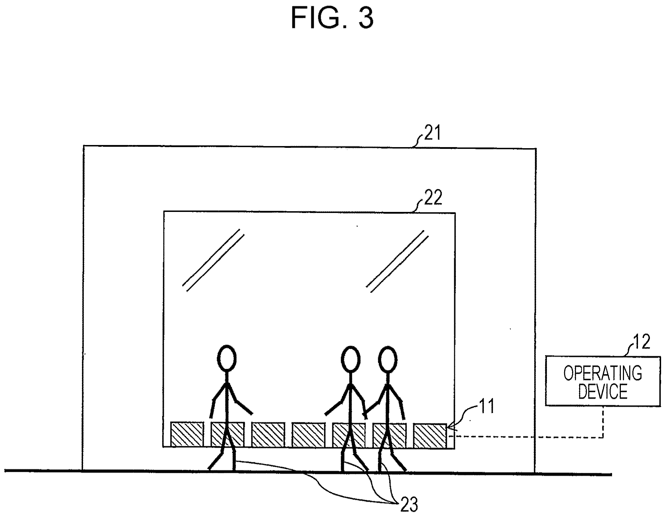

[Fig. 3] Fig. 3 illustrates an installation example of the photovoltaic power generation apparatus illustrated in Fig. 1.

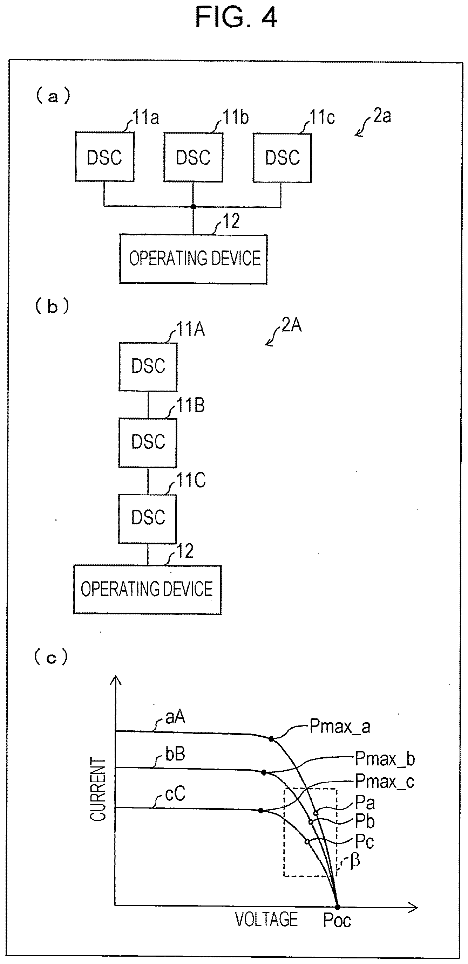

[Fig. 4] Fig. 4 illustrates configuration of photovoltaic power generation apparatuses of Embodiment 2, in which (a) is a block diagram illustrating a configuration in which dye-sensitized solar cells are connected in parallel, (b) is a block diagram illustrating a configuration in which dye-sensitized solar cells are connected in series, and (c) is a graph indicating variation states of operating points in the photovoltaic power generation apparatus illustrated in (a) and the photovoltaic power generation apparatus illustrated in (b).

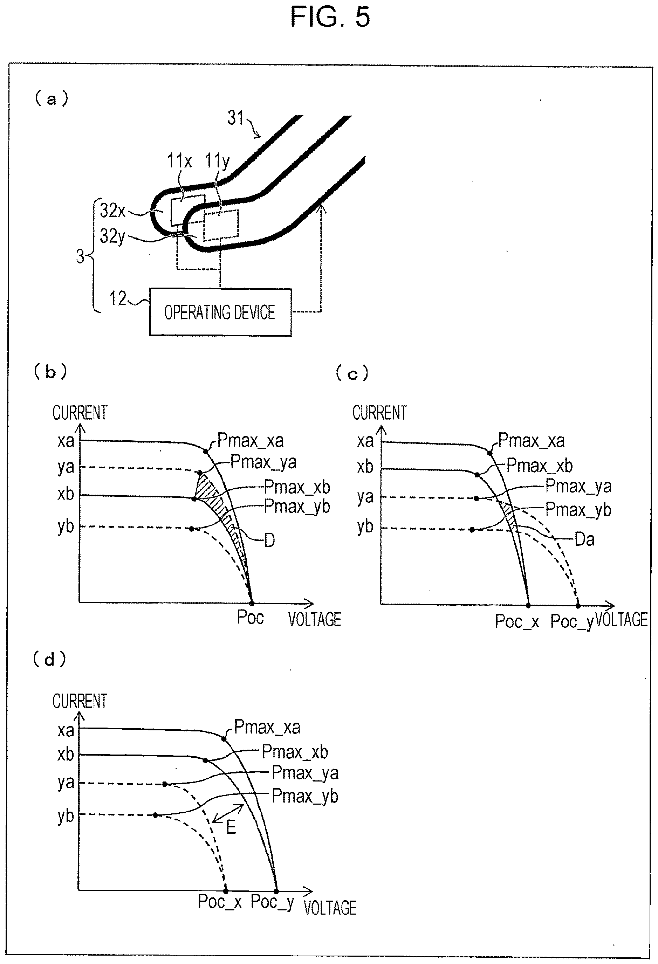

[Fig. 5] Fig. 5 illustrates a photovoltaic power generation apparatus of Embodiment 3, in which (a) illustrates another installation example of the photovoltaic power generation apparatus, (b) is a graph indicating a relation between operation characteristics in a form in which a plurality of dye-sensitized solar cells are connected, (c) is a graph indicating another relation between the operation characteristics, and (d) is a graph indicating the mutual relation as a comparative example.

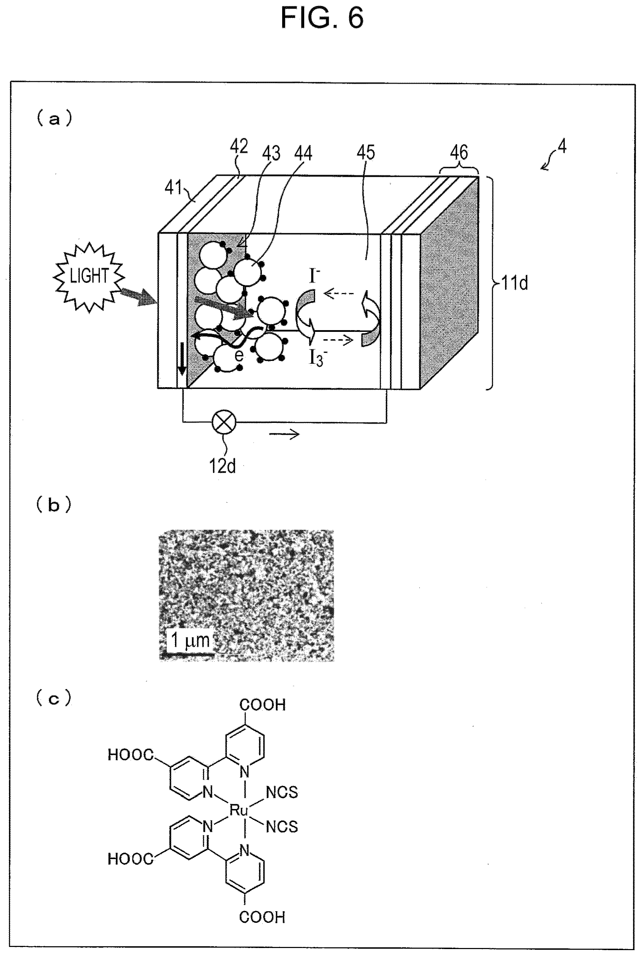

[Fig. 6] Fig. 6 illustrates a configuration of a photovoltaic power generation apparatus of Embodiment 4, in which (a) is a schematic view illustrating an entire configuration of the photovoltaic power generation apparatus, (b) illustrates an image representing titanium oxide fine particles contained in porous titanium oxide constituting a dye-sensitized solar cell, and (c) illustrates a structural formula indicating a molecular structure of dye used for the dye-sensitized solar cell.

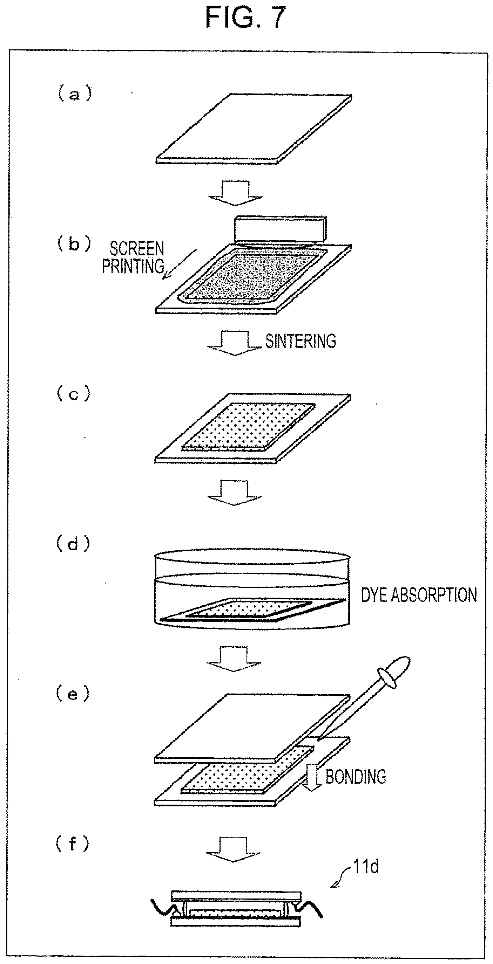

[Fig. 7] (a) to (f) of Figs. 7 illustrate procedure for manufacturing a solar cell included in the photovoltaic power generation apparatus illustrated in Fig. 6.

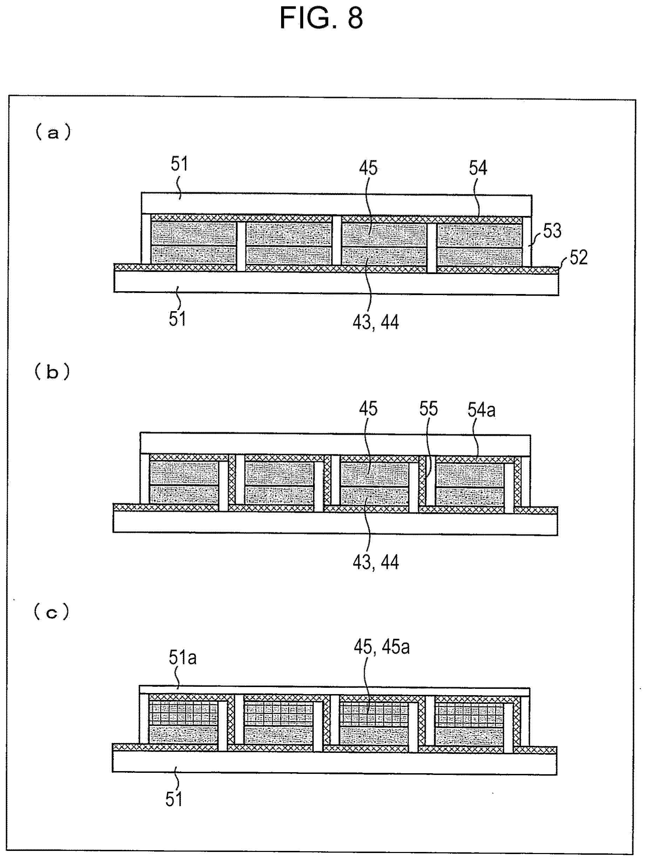

[Fig. 8] Fig. 8 is a sectional view illustrating an example of an integrated structure of a plurality of cells in a form in which the photovoltaic power generation apparatus illustrated in Fig. 6 is constituted by the cells, in which (a) illustrates a W-type integrated structure, (b) illustrates a Z-type integrated structure, and (c) illustrates a monolithic integrated structure.

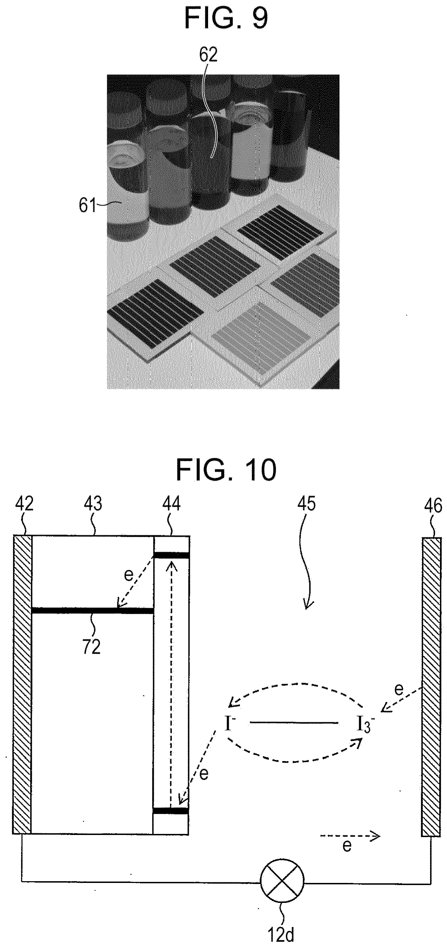

[Fig. 9] Fig. 9 illustrates an image representing variations in colors of dye used for the photovoltaic power generation apparatus illustrated in Fig. 6.
[Fig. 10] Fig. 10 is a conceptual diagram illustrating an operation of the photovoltaic power generation apparatus illustrated in Fig. 6.

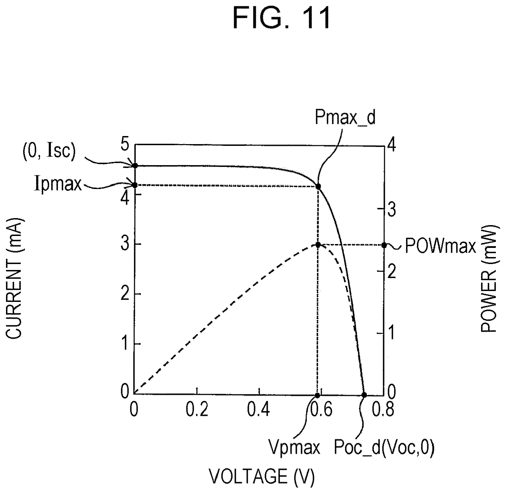

[Fig. 11] Fig. 11 is a graph indicating current output by the photovoltaic power generation apparatus illustrated in Fig. 6 and power generated by the photovoltaic power generation apparatus relative to voltage output by the photovoltaic power generation apparatus.

### Description of Embodiments

### [Embodiment 1]

A first embodiment of the invention will be described as follows with reference to Fig. 1 to Fig. 3.

### <<Configuration of photovoltaic power generation apparatus 1>>

Fig. 1 illustrates a configuration of a photovoltaic power generation apparatus 1 of the present embodiment, in which (a) is a block diagram illustrating a schematic configuration of the photovoltaic power generation apparatus 1, (b) is a graph indicating a relation between voltage and current output by a DSC 11 of the photovoltaic power generation apparatus 1 when energy of light received by the DSC 11 is large, (c) is a graph indicating the relation when the energy is small, and (d) is a block diagram illustrating a configuration of the photovoltaic power generation apparatus 1 including a variable resistance 13.

As illustrated in Fig. 1(a), the photovoltaic power generation apparatus 1 includes a dye-sensitized solar cell (DSC) 11 (photovoltaic power generation unit), and an operating device 12 (device).

The DSC 11 converts light into power.

The operating device 12 operates by the power generated by the DSC 11 through photoelectric conversion. As the operating device 12, for example, an infrared sensor (such as a human detection sensor), a temperature sensor, an illuminance sensor, a gas sensor, or a motion sensor (such as a Doppler radar sensor) is used. As exemplified above, a sensor whose power consumption is relatively small among general sensors is used as the operating device 12. A device whose power consumption is relatively small is suitable for the operating device 12 of the present embodiment.

### (State of operating point)

A solar cell has a characteristic that current to be taken out is determined depending on voltage applied to a connected load. Hereinafter, an "operating point" represents a variable indicating an operation state of the DSC 11, which is specified by voltage and current output by the DSC 11 when the DSC 11 connected to a device (load) receives light to operate the device.

Generally, an intensity and/or quantity of light received by the DSC can vary due to various factors. When the intensity and/or quantity of the received light varies, energy of the light per unit time varies and power generated by the DSC also varies. In other words, voltage and/or current output by the DSC 11 varies.

When the energy of the light received by the DSC 11 (hereinafter, simply referred to as light reception energy of the DSC 11) per unit time is relatively large, the DSC 11 exhibits a voltage-current characteristic that short-circuit current is relatively large as illustrated in Fig. 1(b). In this case, the operating point of the DSC 11 is set at an operating point P1. When the light reception energy of the DSC 11 is relatively small, the DSC 11 exhibits a voltage-current characteristic that short-circuit current is relatively small as illustrated in Fig. 1(c). In this case, the operating point of the DSC 11 is set at an operating point P2 which is substantially the same as the operating point P1.

Hereinafter, an "optimum operating point" means an operating point specified by voltage and current when the power output by the DSC 11 is maximum. A "non-operating point" means an operating point specified by open-circuit voltage when the output of the DSC 11 is opened and current whose value is 0. Note that, the power converted from the light by the DSC 11 is 0 at the non-operating point.

Operating points Pmax1 and Pmax2 respectively indicated in Figs. 1(b) and (c) are optimum operating points (hereinafter, the operating point Pmax is referred to as an optimum operating point Pmax). Operating points Poc indicated in Figs. 1(b) and (c) are non-operating points (hereinafter, the operating point Poc is referred to as a non-operating point Poc). In a situation illustrated in Fig. 1(b), a power consumption characteristic (described below) of the operating device 12 is defined so that the operating point of the DSC 11 is included in a range between the optimum operating point Pmax1 and the non-operating point Poc, excluding the both points. In a situation illustrated in Fig. 1(c), the operating point of the DSC 11 is set to be included in a range between the optimum operating point Pmax2 and the non-operating point Poc, excluding the both points, by the same setting of the power consumption characteristic of the operating device 12.

That is, simply by appropriately defining the power consumption characteristic of the operating device 12, even when the light reception energy of the DSC 11 varies, a deviation between the operating point P1 and the operating point P2 is smaller than a deviation between the optimum operating points. This will be further described.

Fig. 2 is a graph comparing variations of operating points in accordance with variation of light reception energy of the DSC, in which (a) illustrates variation states of optimum operating points of a conventional DSC and (b) illustrates variation states of operating points of the DSC of the photovoltaic power generation apparatus 1 illustrated in Fig. 1.

Operating points P101 to P104 of the conventional DSC, which are illustrated in Fig. 2(a), are optimum operating points. For example, by maximum power point tracking (MPPT) control, the operating points are always controlled at the optimum operating points even when the light reception energy varies. Note that, the light reception energy of the DSC becomes small as being advanced from the operating point P101 to the operating point P104.

It is clear from the graph of Fig. 2(a) that when the light reception energy of the DSC varies in the MPPT control, current output from the DSC particularly varies greatly.

On the other hand, the operating point P1 of the DSC 11, which is illustrated in Fig. 2(b), is included in a range between the optimum operating point Pmax1 and the non-operating point Poc, excluding the both points. Similarly, the operating point P2 is included in a range between the optimum operating point Pmax2 and the non-operating point Poc, excluding the both points. The operating point P3 is included in a range between an optimum operating point Pmax3 and the non-operating point Poc, excluding the both points. The operating point P4 is included in a range between an optimum operating point Pmax4 and the non-operating point Poc, excluding the both points.

It is desired that current values of the operating points P1 to P4 are almost equal to each other and, for example, a deviation between the currents of the operating points P1 to P4 is within ±5% of an average current value. Further, voltage values of the operating points P1 to P4 are almost equal to each other and, for example, a deviation between the voltages of the operating points P1 to P4 is within ±5% of an average voltage value.

Here, a deviation (±ΔI) of the currents and a deviation (±ΔV) of the voltages illustrated as a range α in Fig. 2(b) are kept a value of the current flowing through the operating device 12 or the voltage applied to the operating device 12 in a variation range (a range of rated current and/or a range of rated voltage) allowing a normal operation of the operating device 12. As a result, current outside the rated current does not flow through the operating device 12 or voltage outside the rated voltage is not applied to the operating device 12, so that a stable operation of the operating device 12 is ensured and a malfunction of the operating device 12 is able to be prevented.

### (Power consumption characteristic of operating device)

The operating device 12 is directly or indirectly connected to the DSC 11 so as to consume power converted from light by the DSC 11. An amount of the power to be converted and consumed is defined depending on a power consumption characteristic of the operating device 12. When the power to be consumed by the operating device 12 is defined, the operating point of the DSC 11, which is specified by the voltage and the current output by the DSC 11, is also defined.

Here, the power consumption characteristic of the operating device 12 may be a resistance of the operating device 12. Thereby, the operating point is defined only by determining the resistance of the operating device 12 regardless of a type of the DSC 11.

For example, when the resistance (value) of the operating device 12 is high, the voltage output by the DSC 11 is high and the current output by the DSC 11 is low. As a result, the operating points P1 to P4 illustrated in Fig. 2(b) come close to the non-operating point Poc. By increasing the resistance of the operating device 12, the deviation between the operating points P1 to P4 is small as the operating points P1 to P4 come close to the non-operating point Poc.

### <<Setting example of operating voltage of operating device>>

As the operating device 12, a motion sensor (for example, manufactured by Parallax, Inc.) that normally operates in a voltage range of 4.75 V or more to 5.25 V or less (that is, a rated voltage range is ±5% of 5 V (center voltage)) is used. In this case, by selecting the motion sensor having an appropriate resistance value, the operating voltage of the motion sensor is able to fall in the voltage range of 4.75 V or more to 5.25 V or less no matter how the light reception energy of the DSC 11 varies. When the operating voltage falls in the rated voltage range, the operating current naturally falls in a rated current range.

The above is an example, and, for example, a motion sensor that normally operates in a voltage range of 4.8 V or more to 5.2 V or less, an infrared sensor (for example, manufactured by Nippon Ceramic Co., Ltd.) that normally operates in a voltage range of 2.2 V or more to 15 V or less may be used as the operating device 12.

### (Installation example of photovoltaic power generation apparatus 1)

Fig. 3 illustrates an installation example of the photovoltaic power generation apparatus 1 illustrated in Fig. 1.

As illustrated in Fig. 3, the photovoltaic power generation apparatus 1 operates by arranging the DSC 11 in a material 22 (such as window or display window) installed inside a building 21. Thereby, the DSC 11 is able to receive sunlight and/or light whose light source is a lighting apparatus arranged in the building 21 and generate power.

Generally, when the photovoltaic power generation apparatus is used indoors or semi-indoors as illustrated in Fig. 3, light entering the DSC is weak compared to a case where the sunlight is received outdoors. Since the originally weak light is blocked by a passenger or the like, the power output by the DSC varies greatly compared to a case where the photovoltaic power generation apparatus is used outdoors.

For example, when the number of passengers 23 is small, the energy of light received by the DSC 11 per unit time becomes relatively large in the photovoltaic power generation apparatus 1, so that the DSC 11 outputs the voltage and the current illustrated in Fig. 1(b). When the number of passengers 23 is large, the energy of light received by the DSC 11 per unit time becomes relatively small, so that the DSC 11 outputs the voltage and the current illustrated in Fig. 1(c).

### (Simulation)

A simulation to reproduce a situation illustrated in Fig. 3 is carried out.

In the simulation, an operation of blocking the light entering the DSC 11 by the passenger 23 is reproduced by making a shadow (an area on which no light is incident) in an area of one third of a light receiving surface of the DSC 11 with use of an obstacle.

A DSC panel (hereinafter, referred to as a panel) that has a light receiving surface of 30 cm x 30 cm and has a conversion efficiency of 8.5% is used as the DSC 11.

Light received by the panel has energy per unit time and area of 100 W/m².

A resistance element whose resistance value is 150 Ω is used as the operating device 12. Note that, the resistance element is a simulated resistance that simulates the operating device 12.

The panel and the resistance element are configured so that the power generated by the panel is consumed by the resistance element.

An optimum operating point of the panel is specified by voltage of 4.2 V and current of 0.175 A. A non-operating point of the panel is specified by voltage (open-circuit voltage) of 5.4 V and current of 0 A.

Note that, short-circuit current of the panel is 0.246 A.

### (Simulation result)

The following Table 1 indicates a result of the simulation reproducing the situation illustrated in Fig. 3.

**[Table 1]**

| | obstacle is present (shadow is made in one third) | obstacle is not present |
|---|---|---|
| V | 5.2 V | 5.3 V |
| I | 0.035 A | 0.036 A |

In Table 1, each numerical value described in a first line as "V" indicates a value of the voltage output by the panel. Each numerical value described in a second line as "I" indicates a value of the current output by the panel.

An operating point specified by the voltage and the current output by the panel indicated in Table 1 is included between the optimum operating point and the non-operating point.

As indicated in Table 1, a voltage value when an obstacle is present is smaller by 0.1 V than a voltage value when an obstacle is not present. That is, when 5.3 V which is the voltage value when an obstacle is not present is set as a reference, the voltage value varies by about 1.9%.

A current value when an obstacle is present is smaller by 0.001 A than a current value when an obstacle is not present. That is, when 0.036 A which is the current value when an obstacle is not present is set as a reference, the current value varies by about 2.8%.

### (Comparative example)

The following Table 2 indicates a simulation result when the same operating device 12 operates with the optimum operating point in the simulation whose result is indicated in Table 1.

**[Table 2]**

| | obstacle is present (shadow is made in one third) | obstacle is not present |
|---|---|---|
| V | 3.9 V | 4.3 V |
| I | 0.1022 A | 0.138 A |

As indicated in Table 2, when 4.3 V which is the voltage value when an obstacle is not present is set as a reference, the voltage value varies by about 9.3%. In comparison with this variation, the variation (1.9%) of the voltage value in the simulation whose result is indicated in Table 1 is reduced.

When 0.138 A which is the current value when an obstacle is not present is set as a reference, the current value varies by about 25.9%. In comparison with this variation, the variation (about 2.8%) of the current value in the simulation whose result is indicated in Table 1 is reduced.

### <<Effect of photovoltaic power generation apparatus 1>>

As described above, the photovoltaic power generation apparatus 1 is able to suppress the variation of the operating point of the DSC 11. Thereby, even when the photovoltaic power generation apparatus 1 is installed in a place where the light reception energy of the DSC 11 varies, the operating device 12 is able to operate more stably compared to a conventional device. Since it is possible to inhibit the DSC 11 from outputting the power falling outside a normal operation range of the operating device 12, the operating device 12 is able to operate more stably compared to a conventional device and a malfunction of the operating device 12 is also able to be prevented.

Further, an operating point control circuit (for example, a voltage step-up circuit or a voltage step-down circuit) that is used, when the power generated by the DSC 11 varies, for cancelling the variation is not required, so that it is possible to realize the photovoltaic power generation apparatus 1 with a simplified configuration. This makes it possible to provide the photovoltaic power generation apparatus 1 that is able to generate power stably and is inexpensive.

### <<Other components>>

As illustrated in Fig. 1(d), the photovoltaic power generation apparatus 1 may further include a variable resistance 13 that consumes power converted from light by the DSC 11. In this case, since overall resistance of the photovoltaic power generation apparatus 1 is able to be adjusted by the variable resistance 13, an optimum operating point is able to be set easily.

The DSC 11 may be provided as an independent power supply that supplies power to the operating device 12. In this case, since the operating device 12 is able to use only power whose variation is suppressed, it is possible to ensure that the operating device 12 operates more stably compared to a conventional device and prevent a malfunction of the operating device 12.

The present example, not forming part of the claimed invention, also includes a photovoltaic power generation method for operating the DSC 11 in a range between an operating point of the DSC 11 when the power is maximum and a non-operating point when the DSC 11 is opened, excluding the both points, by defining a power consumption characteristic of the operating device 12 to which the power generated by the DSC 11 through photoelectric conversion is supplied. The aforementioned effect is obtained by the photovoltaic power generation method.

### [Embodiment 2]

A second embodiment of the invention will be described as follows with reference to Fig. 4. Note that, for convenience of description, a member having the same function as the member described in the aforementioned embodiment will be denoted by the same reference sign and description thereof will be omitted.

### <<Configurations and operations of photovoltaic power generation apparatuses 2a and 2A>>

Fig. 4 illustrates a configuration of photovoltaic power generation apparatuses 2a and 2A of the present embodiment, in which (a) is a block diagram illustrating a configuration in which DSCs 11a, 11b, and 11c are connected in parallel, (b) is a block diagram illustrating a configuration in which DSCs 11A, 11B, and 11C are connected in series, and (c) is a graph indicating variation states of operating points in the photovoltaic power generation apparatus 2a illustrated in (a) and the photovoltaic power generation apparatus 2A illustrated in (b).

As illustrated in Fig. 4(a), the photovoltaic power generation apparatus 2a includes the DSCs 11a, 11b, and 11c (photovoltaic power generation units) and an operating device 12 (device). As illustrated in Fig. 4(b), the photovoltaic power generation apparatus 2A includes the DSCs 11A, 11B, and 11C (photovoltaic power generation units) and an operating device 12 (device).

### (States of operating points)

In the photovoltaic power generation apparatuses 2a and 2A, an operating point Pa of the DSC 11a or 11A, an operating point Pb of the DSC 11b or 11B, and an operating point Pc of the DSC 11c or 11C are included in a range β as illustrated in Fig. 4(c).

Here, the range β indicates a range in which, in a case where light reception energy of the DSCs 11a, 11b, and 11c greatly varies, even when current flows from one DSC of the DSCs 11a, 11b, and 11c to another DSC whose voltage is relatively low, characteristics of the other DSCs are not deteriorated, or indicates a range in which even when current flows from one of the DSCs 11A, 11B, and 11C to another thereof whose voltage is relatively low, characteristics of the other DSC are not deteriorated. The range β is defined by an experiment or the like.

Note that, in Fig. 4(c), a curve aA represents an operation characteristic of the DSC 11a or 11A. An operating point Pmax_a represents an optimum operating point of the DSC 11a or 11A. A curve bB represents an operation characteristic of the DSC 11b or 11B. An operating point Pmax_b represents an optimum operating point of the DSC 11b or 11B. A curve cC represents an operation characteristic of the DSC 11c or 11C. An operating point Pmax_c represents an optimum operating point of the DSC 11c or 11C. An operating point Poc represents a non-operating point of the DSC 11a, 11b, 11c, 11A, 11B, or 11C.

An operating point Pa is included in a range between the operating point Pmax_a and the operating point Poc, excluding the both points. Similarly, an operating point Pb is included in a range between the operating point Pmax_b and the operating point Poc, excluding the both points. An operating point Pc is included in a range between the operating point Pmax_c and the operating point Poc, excluding the both points.

### (Simulations)

A plurality of simulations to reproduce situations illustrated in Figs. 4(a), (b), and (c) are carried out.

In the plurality of simulations, differences of voltages and currents output by the DSCs 11a, 11b, 11c, 11A, 11B, and 11C are reproduced by making a shadow in each light receiving surface of the DSCs 11a, 11b, 11c, 11A, 11B, and 11C with an obstacle.

A DSC panel (hereinafter, referred to as a panel) a that has a light receiving surface of 30 cm x 30 cm and has a conversion efficiency of 8.5% is used as each of the DSCs 11a and 11A. A panel b having the same configuration as that of the panel a is used as each of the DSCs 11b and 11B. A panel c having the same configuration as that of the panel a is used as each of the DSCs 11c and 11C.

Light received by the panels a, b, and c has energy per unit time and area of 100 W/m².

A resistance element whose resistance value is 150 Ω is used as the operating device 12. Note that, the resistance element is a simulated resistance that simulates the operating device 12.

Optimum operating points of the panels a, b, and c are specified by voltage of 4.2 V and current of 0.175 A. Non-operating points of the panels a, b, and c are specified by voltage (open-circuit voltage) of 5.4 V and current of 0 A.

Note that, short-circuit current of the panels a, b, and c is 0.246 A.

### (Simulation result of individual panels)

The following Table 3 indicates a result of checking variations of operating points when the panels a, b, and c are individually connected to the resistance element.

**[Table 3]**

| | panel a | panel b | panel c |
|---|---|---|---|
| | shadow is made in 50% of area | shadow is made in 20% of area | obstacle is not present |
| V | 5.2 V | 5.3 V | 5.3 V |
| I | 0.035 A | 0.036 A | 0.036 A |

Table 3 is shown with a method similar to that of Table 1.

As indicated in Table 3, a voltage value when a shadow is made in 50% of an area of the light receiving surface of the panel a with an obstacle is smaller by 0.1 V than a voltage value output by the panel c when an obstacle is not present. That is, when 5.3 V which is the voltage value when an obstacle is not present is set as a reference, the voltage value varies by about 1.9%.

A current value when a shadow is made in 50% of the area of the light receiving surface of the panel a with an obstacle is smaller by 0.001 A than a current value output by the panel c when an obstacle is not present. That is, when 0.036 A which is the current value when an obstacle is not present is set as a reference, the current value varies by about 2.8%.

Next, a voltage value when a shadow is made in 20% of an area of the light receiving surface of the panel b with an obstacle is the same as the voltage value output by the panel c when an obstacle is not present.

A current value when a shadow is made in 20% of the area of the light receiving surface of the panel b with an obstacle is the same as the current value output by the panel c when an obstacle is not present.

### (Simulation result of panels connected in parallel)

The following Table 4 indicates a result of checking variations of operating points when the panels a, b, and c are connected in parallel as illustrated in Fig. 4(a).

**[Table 4]**

| | pattern 1 | pattern 2 |
|---|---|---|
| | obstacle is not present | shadow is made in 50% of each of two panels |
| V | 5.3 V | 5.25 V |
| I | 0.105 A | 0.103 A |

Table 4 is shown with a method similar to that of Table 1.

As indicated in Table 4, a voltage value (corresponding to the pattern 2) when a shadow is made in 50% of an area of each light receiving surface of two of the panels a, b, and c with an obstacle is smaller by 0.05 V than a voltage value (corresponding to the pattern 1) when an obstacle is not present. That is, when 5.3 V which is the voltage value when an obstacle is not present is set as a reference, the voltage value varies by about 0.9%.

A current value (corresponding to the pattern 2) when a shadow is made in 50% of an area of each light receiving surface of two of the panels a, b, and c with an obstacle is smaller by 0.002 A than a current value (corresponding to the pattern 1) when an obstacle is not present. That is, when 0.105 A which is the current value when an obstacle is not present is set as a reference, the current value varies by about 1.9%.

### (Simulation result of panels connected in series)

The following Table 5 indicates a result of checking variations of operating points when the panels a, b, and c are connected in parallel as illustrated in Fig. 4(b).

**[Table 5]**

| | pattern 1 | pattern 2 |
|---|---|---|
| | obstacle is not present | shadow is made in 50% of each of two panels |
| V | 16.0 V | 15.7 V |
| I | 0.035 A | 0.034 A |

Table 5 is shown with a method similar to that of Table 1.

As indicated in Table 5, a voltage value (corresponding to the pattern 2) when a shadow is made in 50% of an area of each light receiving surface of two of the panels a, b, and c with an obstacle is smaller by 0.3 V than a voltage value (corresponding to the pattern 1) when an obstacle is not present. That is, when 16.0 V which is the voltage value when an obstacle is not present is set as a reference, the voltage value varies by about 1.9%.

A current value (corresponding to the pattern 2) when a shadow is made in 50% of an area of each light receiving surface of two of the panels a, b, and c with an obstacle is smaller by 0.001 A than a current value (corresponding to the pattern 1) when an obstacle is not present. That is, when 0.035 A which is the current value when an obstacle is not present is set as a reference, the current value varies by about 2.9%.

### (Summary of simulation results)

Conventionally, in a case where, in a form in which a plurality of DSCs are connected, light reception energy of each of the DSCs varies, current flows from a DSC whose voltage is relatively high to a DSC whose voltage is relatively low due to differences of voltages and currents output by the DSCs in some cases.

However, in the simulations whose results are indicated in Table 3 to Table 5, current which causes deterioration in the characteristics of other DSCs does not flow between the DSCs 11a, 11b, and 11c, or between the DSCs 11A, 11B, and 11C. It is not necessary to consider a problem of rate-determination by current of the DSC whose current is the smallest as a result of the current flowing from one DSC to other DSCs. This is because there is almost no difference between output characteristics of the DSCs.

### <<Effects of photovoltaic power generation apparatuses 2a and 2A>>

As described above, it is possible to prevent malfunctions of the DSCs 11a, 11b, 11c, 11A, 11B, and 11C due to the current flowing between the DSCs 11a, 11b, and 11c. It is also possible to prevent malfunctions of the DSCs 11A, 11B, and 11C due to the current flowing between the DSCs 11A, 11B, and 11C. It is also possible to prevent rate-determining of the current.

### [Embodiment 3]

A third embodiment of the invention will be described as follows with reference to Fig. 5. Note that, for convenience of description, a member having the same function as the member described in the aforementioned embodiments will be denoted by the same reference sign and description thereof will be omitted.

### <<Configuration and operation of photovoltaic power generation apparatus 3>>

Fig. 5 illustrates a photovoltaic power generation apparatus 3 of the present embodiment, in which (a) illustrates another example of installation of the photovoltaic power generation apparatus 3, (b) is a graph indicating a relation between operation characteristics in a form in which DSCs 11x and 11y are connected, (c) is a graph indicating another relation between the operation characteristics, and (d) is a graph indicating a relation between operation characteristics as a comparative example.

As illustrated in Fig. 5(a), the photovoltaic power generation apparatus 3 includes the DSCs 11x and 11y (photovoltaic power generation units) and an operating device 12 (device). The operating device 12 is, for example, a human detection sensor, and consumes power converted from light by the DSCs 11x and 11y and transmit an operation start/stop signal to an escalator 31 by detecting a user of the escalator 31.

Note that, the DSCs 11x and 11y and the escalator 31 are connected in a similar manner to the DSCs 11a and 11b and the operating device 12 illustrated in Fig. 4(a) (in this case, it is assumed that the DSC 11c does not exist). Alternatively, the DSCs 11x and 11y and the escalator 31 are connected in a similar manner to the DSCs 11A and 11B and the operating device 12 illustrated in Fig. 4(b) (note that, it is assumed that the DSC 11C does not exist and the DSC 11B is connected to the operating device 12).

The photovoltaic power generation apparatus 3 operates by respectively arranging the DSCs 11x and 11y on side walls 32x and 32y of the escalator 31. The DSCs 11x and 11y are able to generate power by receiving sunlight and/or light whose light source is a lighting apparatus arranged near a place in which the escalator 31 is installed.

The number of users who use the escalator 31 per unit time usually varies. Further, light reception energy of the side wall 32x is different from light reception energy of the side wall 32y. A case where the light reception energy of the side wall 32y is smaller than the light reception energy of the side wall 32x will be described below.

### (Setting example 1 of operation characteristics)

As illustrated in Fig. 5(b), an operating point of the DSC 11x exists on a curve represented by a curve xa when the number of users who use the escalator 31 per unit time is the smallest. The operating point of the DSC 11x exists on a curve represented by a curve xb when the number is the largest. An operating point of the DSC 11y exists on a curve represented by a curve ya when the number is the smallest. The operating point of the DSC 11y exists on a curve represented by a curve yb when the number is the largest.

Note that, since the number of users who use the escalator 31 per unit time continuously changes, a curve on which the operating point of the DSC 11x exists is in an area between the curve xa and the curve xb. A curve on which the operating point of the DSC 11y exists is in an area between the curve ya and the curve yb. Each area is described as a "variation area" below.

An operating point Pmax_xa represents an optimum operating point when the DSC 11x operates along the curve xa. An operating point Pmax_xb represents an optimum operating point when the DSC 11x operates along the curve xb. An operating point Pmax_ya represents an optimum operating point when the DSC 11y operates along the curve ya. An operating point Pmax_yb represents an optimum operating point when the DSC 11y operates along the curve yb.

An operating point Poc represents a non-operating point of the DSC 11x and a non-operating point of the DSC 11y.

An area D represents an area in which a variation area which is an area between a range between the operating point Pmax_xa and the operating point Poc, excluding the both points, and a range between the operating point Pmax_xb and the operating point Poc, excluding the both points, is overlapped with a variation area which is an area between a range between the operating point Pmax_ya and the operating point Poc, excluding the both points, and a range between the operating point Pmax_yb and the operating point Poc, excluding the both points on the curb yb.

That is, the area D includes at least one overlapping point belonging to both of the variation area of the DSC 11x and the variation area of the DSC 11y.

When the area D exists, by appropriately setting the resistance of the operating device 12, the operating point of the DSC 11x is able to be set at an operating point included in the area D or an operating point near the area D and the operating point of the DSC 11y is able to be set at an operating point included in the area D or an operating point near the area D.

### (Setting example 2 of operation characteristics)

As illustrated in Fig. 5(c), operation characteristics may be set so that an operation characteristic of the DSC 11x crosses an operation characteristic of the DSC 11y.

An operating point Poc_x represents a non-operating point of the DSC 11x. An operating point Poc_y represents a non-operating point of the DSC 11y.

An area Da represents an area in which a variation area which is an area between a range between the operating point Pmax_xa and the operating point Poc_x, excluding the both points, and a range between the operating point Pmax_xb and the operating point Poc_x, excluding the both points, is overlapped with a variation area which is an area between a range between the operating point Pmax_ya and the operating point Poc_y, excluding the both points, and a range between the operating point Pmax_yb and the operating point Poc_y, excluding the both points on the curb yb.

That is, the area Da includes at least one overlapping point belonging to both of the variation area of the DSC 11x and the variation area of the DSC 11y.

When the area Da exists, by appropriately setting the resistance of the operating device 12, the operating point of the DSC 11x is able to be set at an operating point included in the area Da or an operating point near the area Da and the operating point of the DSC 11y is able to be set at an operating point included in the area Da or an operating point near the area Da.

### <<Effect of photovoltaic power generation apparatus 3>>

Accordingly, even when the energies of the light received by the DSC 11x and the DSC 11y per unit time are different from each other, with the area (area D or Da) in which the variation area of the DSC 11x and the variation area of the DSC 11y are overlapped, the DSCs 11x and 11y are able to operate in an area included in the overlapping area or an area near the overlapping area. Thereby, it is possible to obtain the operation characteristic of the DSC 11x and the operation characteristic of the DSC 11y, which are close to each other, so that it is possible to prevent a problem of deteriorating characteristics of DSCs due to current flowing from one DSC to the other DSC and a problem of variation of voltage applied to the operating device 12.

In other words, even when the DSCs 11x and 11y are under different light radiation conditions, it is possible to suppress variation in the operating points of the DSCs 11x and 11y.

It is also possible to ensure a large area for installation compared to a conventional manner because the DSCs 11x and 11y are able to be installed under different light radiation conditions.

### (Comparative example)

When DSCs of the photovoltaic power generation apparatus do not have the aforementioned area D or Da, the curves xa and xb are deviated from the curves ya and yb as indicated with an arrow E in Fig. 5(d). When operation characteristics are deviated in this manner, a problem of deteriorating characteristics of DSCs due to current flowing from one DSC to the other DSC or a problem of variation of voltage applied to the operating device 12 is not able to be reduced.

### [Embodiment 4]

A fourth embodiment of the invention will be described as follows with reference to Figs. 6 to 11. Note that, for convenience of description, a member having the same function as the member described in the aforementioned embodiment will be denoted by the same reference sign and description thereof will be omitted.

### <<Configuration of photovoltaic power generation apparatus 4>>

### (Basic configuration)

Fig. 6 illustrates a configuration of the photovoltaic power generation apparatus 4 of the present embodiment, in which (a) is a schematic view illustrating an entire configuration of the photovoltaic power generation apparatus 4, (b) illustrates an image representing titanium oxide fine particles contained in porous titanium oxide constituting a solar cell 11d, and (c) illustrates a structural formula indicating a molecular structure of a dye 44 used for the solar cell 11d.

As illustrated in Fig. 6(a), the photovoltaic power generation apparatus 4 includes a solar cell 11d (photovoltaic power generation unit) and an external circuit 12d (device).

The solar cell 11d includes a glass (hereinafter, also described as a "substrate") 41, a transparent conductive film (hereinafter, also referred to as a "TCO") 42, porous titanium oxide (hereinafter, also referred to as a "porous titanium oxide film" or "titanium oxide") 43, the dye 44, an electrolyte 45, and a counter electrode 46.

A film of the porous titanium oxide 43 is formed on the substrate made of the glass 41 on which the TCO 42 is formed. In this case, the porous titanium oxide film 43 contains titanium oxide fine particles which are illustrated in Fig. 6(b) and each of which has a diameter of 10 to 20 nm.

The dye 44 is, for example, a ruthenium (Ru) metal complex dye specified by the structural formula illustrated in Fig. 6(c). The dye 44 is adsorbed onto a surface of the porous titanium oxide film 43. The dye 44 has a functional group such as a carboxyl group, and when the carboxyl group and the titanium oxide are subjected to dehydration reaction, the titanium oxide 43 and the dye 44 are chemically bound.

A catalyst that activates an oxidation-reduction reaction of the electrolyte 45 is formed on the counter electrode 46. The electrolyte 45 infiltrates between the counter electrode 46 and an electrode having a structure including the transparent conductive film 42, the porous titanium oxide film 43, and the dye 44.

### (Manufacturing procedure)

Fig. 7 illustrates procedure for manufacturing the solar cell 11d included in the photovoltaic power generation apparatus 4 illustrated in Fig. 6, in which (a) illustrates a step of preparing a glass substrate with a transparent conductive film, (b) illustrates a step of creating a titanium oxide electrode, (c) illustrates the glass substrate with the transparent conductive film, on which the titanium oxide electrode is formed, (d) illustrates a step of causing a dye to be adsorbed, (e) illustrates a step of assembling the solar cell 11d, and (f) illustrates the assembled solar cell 11d.

More specifically, at the steps illustrated in Figs. 7(a), (b), and (c), paste in which titanium oxide fine particles are dispersed is applied to the glass substrate with the TCO and the resultant is baked, so that the porous titanium oxide film 43 is created. Then, at the step illustrated in Fig. 7(d), by immersing the created porous titanium oxide film 43 into dye solution, the dye 44 is adsorbed onto a surface of the titanium oxide. After that, an electrolyte layer is formed between the glass with the transparent conductive film, which is obtained by causing the dye 44 to be adsorbed onto the surface of the titanium oxide, and the counter electrode 46, and then a periphery is sealed.

Since there is no vacuum process or high temperature process in the aforementioned steps (temperature is about 500°C at highest in the steps), it is possible to significantly reduce a process cost compared to a conventional photovoltaic power generation apparatus.

### (Configuration of changing power generation efficiency)

In the photovoltaic power generation apparatus 4, the titanium oxide onto which the dye 44 is adsorbed has a porous structure to expand a specific surface area, so that an amount of the dye 44 to be adsorbed is able to be increased to 800 to 1000 times and a HOMO (Highest Occupied Molecular Orbital)-LUMO (Lowest Unoccupied Molecular Orbital) level of the dye 44 is able to be controlled to energy distribution and space distribution suitable for the titanium oxide 43 for the adsorption.

As a configuration of changing power generation efficiency, there are following configurations (1) and (2): (1) a light management configuration that enables the dye 44 in the photovoltaic power generation apparatus 4 to efficiently absorb light; and (2) a control configuration for an internal resistance such as a reactive resistance in each interface inside the photovoltaic power generation apparatus 4, an ion diffusion resistance of the electrolyte 45, or a resistance of an electrode.

In the photovoltaic power generation apparatus 4, in order to realize (1) above, light may be confined in the porous titanium oxide 43, for example, by particle diameter control for titanium oxide fine particles in consideration of a haze rate as an index of an effect of confining light in the photovoltaic power generation apparatus 4. This makes it possible to increase current output by the photovoltaic power generation apparatus 4.

In the photovoltaic power generation apparatus 4, in order to realize (2) above, an AC impedance method may be introduced in resistance analysis of the photovoltaic power generation apparatus 4 to perform resistance analysis in each interface, so that the resultant is fed back to an internal structure or material development of the photovoltaic power generation apparatus 4. This makes it possible to reduce the internal resistance of the photovoltaic power generation apparatus 4.

With use of the aforementioned configurations, it is possible to achieve an energy conversion efficiency of 11.1%, for example, when the photovoltaic power generation apparatus 4 is configured with a size of 5 mm square. Further, it is possible to achieve an energy conversion efficiency of 11.2%, for example, when spectrum correction is used.

### (Integrated structure)

When voltage and current output by the photovoltaic power generation apparatus 4 are increased, for example, a light receiving area of the photovoltaic power generation apparatus 4 is increased. Here, when a plurality of solar cells 11d (hereinafter, described as "cells") are connected in parallel or in series and each of the cell is set as a thin-film solar cell such as a thin-film silicon solar cell or a dye-sensitized solar cell, a plurality of cells may be integrated on a glass substrate 51 serving as the light receiving surface of the photovoltaic power generation apparatus 4.

Fig. 8 is a sectional view illustrating an example of an integrated structure of a plurality of cells in a form in which the photovoltaic power generation apparatus 4 illustrated in Fig. 6 is constituted by the cells, in which (a) illustrates a W-type integrated structure, (b) illustrates a Z-type integrated structure, and (c) illustrates a monolithic integrated structure.

For example, as illustrated in Fig. 8(a), in the photovoltaic power generation apparatus 4, an element including the electrolyte 45, and an element including the titanium oxide 43 and the dye 44 are formed alternately on a substrate (hereinafter, also described as a "substrate with TCO") 51 (obtained by processing the glass 41) on which a conductive layer 54 is formed at a predetermined portion and on a substrate 51 on which a TCO 52 (obtained by processing the TCO 42) is formed at a predetermined portion. The photovoltaic power generation apparatus 4 may have the W-type integrated structure in which the two substrates are bonded so that the elements formed on the substrates alternate with each other. Thereby, the cells are connected in series. Note that, in the W-type integrated structure, the photovoltaic power generation apparatus 4 may further include a sealing film 53 and the conductive film 54.

With the W-type integrated structure, since the cells are able to be connected in series only by bonding two substrates with TCO 51, it is possible to form a high-density integrated structure easily. Further, when the photovoltaic power generation apparatus 4 is set as an integrated dye-sensitized solar cell with a size of 5 cm square by including the W-type integrated structure and the aforementioned "configuration of changing the power generation efficiency", it is possible to achieve an energy conversion efficiency of 8.4%.

For example, as illustrated in Fig. 8(b), in the photovoltaic power generation apparatus 4, an element may be created on one substrate with TCO 51 and the other substrate with TCO 51 may be used as a counter electrode. The photovoltaic power generation apparatus 4 may have a Z-type integrated structure in which the substrate with TCO 51 on which the element is created is bonded with the counter electrode and a connection layer 55 for electrically connecting a cell and an adjacent counter electrode is created. Thereby, the elements are connected in series.

For example, as illustrated in Fig. 8(c), the photovoltaic power generation apparatus 4 may have the monolithic integrated structure which is a structure having one substrate with TCO 51 in the Z-type integrated structure illustrated in Fig. 8(b), and a structure in which layers of the titanium oxide 43 and the like are directly formed successively on a lower layer and the cells are finally connected in series. Note that, the photovoltaic power generation apparatus 4 may further include a cover material 51a and a porous insulting layer 45a in the monolithic integrated structure.

### (Configuration of dye)

Fig. 9 illustrates an image representing variations in colors of the dye 44 of the photovoltaic power generation apparatus 4 illustrated in Fig. 6.

As illustrated in Fig. 9, the dye 44 of the photovoltaic power generation apparatus 4 has various variations in colors. In other words, the solar cell 11d of the photovoltaic power generation apparatus 4 may include the dye 44 in different colors.

The dye 44 may include a green dye 61 and a reddish brown dye 62.

The dye 44 may include a dye that has an absorption peak to the light received by the solar cell 11d in a specific wavelength region.

A plurality of types of dyes 44 may be adsorbed (coadsorbed) onto the surface of the porous titanium oxide film 43.

### <<Operation of photovoltaic power generation apparatus 4>>

Since the dyes 44 in different colors have different light absorption peak wavelengths, it is possible to expand a light wavelength region, in which power generation is allowed, by using the dyes 44 in different colors.

In particular, the reddish brown dye 62 (for example, a dye having an absorption peak in a wavelength of about 550 nm) has a greater gap of HOMO (Highest Occupied Molecular Orbital)-LUMO (Lowest Unoccupied Molecular Orbital) compared to the green dye 61 (for example, a dye having an absorption peak in a wavelength of about 630 nm), and hence is likely to increase voltage output by the photovoltaic power generation unit.

The green dye 61 has an absorption peak in a longer wavelength and has a wider wavelength region of light to be absorbed compared to the reddish brown 62 dye, and hence is likely to increase current output by the photovoltaic power generation unit.

Fig. 10 is a conceptual diagram illustrating an operation of the photovoltaic power generation apparatus 4 illustrated in Fig. 6.

As illustrated in Fig. 10, the dye 44 absorbs light and excites an electron e. The electron e is injected to a conductive band 72 of the porous titanium oxide 43 on a time order of 10⁻¹² seconds, and delivered to the external circuit 12d through the TCO 42.

The oxidized dye 44 receives the electron e from the electrolyte 45 represented as I⁻ and is returned to a ground state (a state before being oxidized). On the other hand, the electrolyte 45 represented as I₃⁻, which is oxidized by the dye 44, is diffused to the counter electrode 46, receives the electron e from the counter electrode 46, and is returned to the electrolyte 45 represented as I⁻ in a reduced state.

Fig. 11 is a graph indicating current output by the photovoltaic power generation apparatus 4 illustrated in Fig. 6 and power generated by the photovoltaic power generation apparatus 4 relative to voltage output by the photovoltaic power generation apparatus 4.

In Fig. 11, a horizontal axis represents a value of the voltage output by the photovoltaic power generation apparatus 4. A left-side vertical axis represents a value of the current output by the photovoltaic power generation apparatus 4. A right-side vertical axis represents a value of the power generated by the photovoltaic power generation apparatus 4. An upper solid line represents a relation between the voltage and the current. A lower solid line represents a relation between the voltage and the power.

As illustrated in Fig. 11, a voltage Vpmax and a current Ipmax corresponding to an operating point Pmax_d (operating point when power POWmax is 2.429 mW) that is an optimum operating point are respectively 0.583 V and 4.16 mA. A voltage Voc that is open-circuit voltage is 0.736 V at an operating point Poc_d that is a non-operating point. Note that, a current Isc which is short-circuit current is 4.57 mA.

In the photovoltaic power generation apparatus 4, the operating point of the solar cell 11d is included between the operating point Pmax_d and the operating point Poc_d.

### <<Effect of photovoltaic power generation apparatus 4>>

Accordingly, by including the dye 44 in different colors in the solar cell 11d, it is possible to suppress reduction of a power generation amount even when an optical spectrum of sunlight changes depending on a time, or when the optical spectrum changes because of a change in a type of a light source lighted indoors.

It is possible to provide the photovoltaic power generation apparatus 4 which has the solar cells 11d colored in various colors and has good designability.

As described above, when the solar cell 11d includes the dye 44 having an absorption peak to the light in a specific wavelength region, it is possible to selectively convert the light in the specific wavelength region among the light received by the solar cell 11d into power. For example, when the light in the specific wavelength region is selectively converted into power, it is possible to change a conversion amount of the power and control the operating point of the solar cell 11d.

Note that, by using a dye having an absorption peak in a wavelength region where intensity of the light is the strongest with respect to the light (for example, the rising sun, the sunlight at day time, the sunset, or light whose light source is fluorescent light, light whose light source is a light-emitting diode (LED)) received by the solar cell 11d, it is possible to make the power generation efficiency of the solar cell 11d highest.

### [Summary]

A photovoltaic power generation apparatus according to aspect 1 of the invention recited in claim 1 is provided.

Here, when the light received by the photovoltaic power generation unit varies, the operating point of the photovoltaic power generation unit also varies. Conventionally, the operating point is controlled such that the power converted by the photovoltaic power generation unit is simply maximized without considering the variation.

It has been discovered by the inventors that as the operating point becomes close to the non-operating point when the photovoltaic power generation unit is opened from the operating point when the power is maximum, variation of the operating point when the light received by the photovoltaic power generation unit varies is reduced.

According the aforementioned configuration, since the operating point is included in a range between the operating point when the power is maximum and the non-operating point, excluding the both points, variation of the operating point becomes smaller compared to a case where the power is maximized. For setting such an operating point, it is only required to set the power consumption characteristic of the device without requiring a control circuit that adjusts output voltage of the photovoltaic power generation unit. Thereby, even when the photovoltaic power generation apparatus is installed in a place where the light received by the photovoltaic power generation unit varies, the device is able to operate more stably with a simplified configuration as compared to a conventional one. Further, it is possible to inhibit the power generation unit from outputting the power falling outside a normal operation range of the device, thus making it also possible to prevent a malfunction of the device.

In the photovoltaic power generation apparatus according to an aspect 2 of the invention, a variation range of voltage output by the photovoltaic power generation unit may be ±5% of a center voltage in the aspect 1 above.

According the aforementioned configuration, it is possible to enhance reliability of achieving the aforementioned effect.

In the photovoltaic power generation apparatus according to an aspect 3 of the invention, the power consumption characteristic may be a resistance of the device in the aspect 1 or 2 above.

According the aforementioned configuration, it is possible to cause the photovoltaic power generation unit to perform an operation, in which variation of the operating point is reduced, only by determining the resistance of the device regardless of a type of the photovoltaic power generation unit.

The photovoltaic power generation apparatus according to an aspect 4 of the invention may further include a variable resistance 13 that consumes the power in any one aspect of the aspects 1 to 3 above.

According the aforementioned configuration, setting of an optimum operating point is able to be performed easily by the variable resistance.

The photovoltaic power generation apparatus according to an aspect 5 of the invention may include a plurality of power generation units each of which prevents, even when current flows from one of the photovoltaic power generation units to another photovoltaic power generation unit whose voltage is relatively low, a characteristic of the other photovoltaic power generation unit from being deteriorated in any one of the aspects 1 to 4 above.

According the aforementioned configuration, it is possible to prevent malfunctions of the plurality of photovoltaic power generation units due to current flowing between the power generation units.

The photovoltaic power generation apparatus according to an aspect 6 of the invention may include a plurality of photovoltaic power generation units in which a range between the both points, in which an operating point of one of the photovoltaic power generation units is included, and a range between the both points, in which an operating point of the other photovoltaic power generation unit is included, have an overlapping point (area D, Da) in any one of the aspects 1 to 5 above.

According the aforementioned configuration, even when light received by one photovoltaic power generation unit of the plurality of power generation units and the other photovoltaic power generation unit have different energies per unit time, each of the photovoltaic power generation units is able to operate at the overlapping point or an operating point near the overlapping point. In other words, even when the plurality of photovoltaic power generation units are under different light radiation conditions, it is possible to suppress variations in the operating points of the plurality of photovoltaic power generation units.

Note that, for implementing the aforementioned configuration, the photovoltaic power generation apparatus may be controlled by a photovoltaic power generation control apparatus that is realized by a computer described below.

In the photovoltaic power generation apparatus according to an aspect 7 of the invention, the photovoltaic power generation unit may be provided as an independent power supply that supplies power to the device in any one of the aspects 1 to 6 above.

According to the aforementioned configuration, since the device is able to use only power whose variation is suppressed, it is possible to ensure that the device operates more stably compared to a conventional device and prevent a malfunction of the device.

In a photovoltaic power generation method according to an aspect 8, not forming part of the claimed invention, by defining a power consumption characteristic of a device (operating device 12, external circuit 12d), to which power generated through photoelectric conversion by a photovoltaic power generation unit (dye-sensitized solar cell 11, 11a to 11c, 11A to 11C, 11x, 11y, solar cell 11d), the photovoltaic power generation unit operates in a range between an operating point Pmax1 to Pmax 4, Pmax_a to Pmax_d, Pmax_xa, Pmax_xb, Pmax_ya, Pmax_yb, Pmax_x to Pmax_y of the photovoltaic power generation unit when the power is maximum and a non-operating point (operating point Poc, Poc_x to Poc_y) when the photovoltaic power generation unit is opened, excluding the both points.

With the aforementioned configuration, the effect described above is achieved.

### [Configuration of dynamically setting operating point]

The photovoltaic power generation apparatus according to each of the aspects of the invention may be controlled by a photovoltaic power generation control apparatus realized by a computer.

Specifically, the photovoltaic power generation control apparatus is a photovoltaic power generation control apparatus that controls a photovoltaic power generation apparatus including a photovoltaic power generation unit that converts light into power and a device that is connected to the photovoltaic power generation unit, and the photovoltaic power generation control apparatus includes operating point information acquisition means that acquires information indicating an operating point of the photovoltaic power generation unit when the power is maximum, non-operating point information acquisition means that acquires information indicating a non-operating point when the photovoltaic power generation unit is opened, and operating point setting information generation means that generates, by using the information acquired by the operating point information acquisition means and the non-operating point information acquisition means, information for setting the operating point of the photovoltaic power generation unit so that the device has a power consumption characteristic by which the photovoltaic power generation unit operates in a range between the operating point of the photovoltaic power generation unit when the power is maximum and the non-operating point when the photovoltaic power generation unit is opened, excluding the both points.

With the aforementioned configuration, when the operating point information acquisition means and the non-operating point information acquisition means dynamically acquire information, the operating point setting information generation means is able to dynamically generate information for setting the operating point that enables a stable operation and malfunction prevention of the device as described above. Accordingly, with use of the information, it is possible to realize a stable operation and malfunction prevention of the device regardless of a type and/or a state of the photovoltaic power generation unit and/or the device. Further, it is possible to automatically perform a stable operation and malfunction prevention of the device when the computer functions as each means.

A program of the photovoltaic power generation control apparatus, which causes the photovoltaic power generation control apparatus to be realized by the computer by causing the computer to function as each means included in the photovoltaic power generation control apparatus, and a computer-readable recording medium having the program recorded therein are also included in the scope of the invention.

### Industrial Applicability

The invention is able to be used, for example, for a photovoltaic power generation apparatus for generating power consumed by a device, for example, such as an infrared sensor (such as a human detection sensor), a temperature sensor, an illuminance sensor, a gas sensor, or a motion sensor (such as a Doppler radar sensor).

### Reference Signs List

1, 2a, 2A, 3, 4 photovoltaic power generation apparatus
11, 11a to 11c, 11A to 11C, 11x, 11y dye-sensitized solar cell (photovoltaic power generation unit)
11d solar cell (photovoltaic power generation unit)
12 operating device (device)
12d external circuit (device)
13 variable resistance
44 dye
61 green dye
62 reddish brown dye
D, Da area (overlapping point)
P1 to P4, Pa to PC operating point
Pmax1 to Pmax 4, Pmax_a to Pmax_d, Pmax_xa, Pmax_xb, Pmax_ya, Pmax_yb, Pmax_x to Pmax_y operating point
Poc, Poc_x to Poc_y operating point (non-operating point)

## Claims

1. A photovoltaic power generation apparatus (1, 2a, 2A), comprising:
a dye-sensitized solar cell (11; 11a, 11b, 11c; 11A, 11B, 11C; 11x, 11y) that converts light into power; and
a sensor (12) that operates by the power, the sensor (12) being directly or indirectly connected to the dye-sensitized solar cell (11; 11a, 11b, 11c; 11A, 11B, 11C; 11x, 11y), wherein
the sensor (12) has a power consumption characteristic by which the dye-sensitized solar cell (11; 11a, 11b, 11c; 11A, 11B, 11C; 11x, 11y) operates only in a range between an operating point of the dye-sensitized solar cell (11; 11a, 11b, 11c; 11A, 11B, 11C; 11x, 11y) when the power is maximum and a non-operating point of the dye-sensitized solar cell (11; 11a, 11b, 11c; 11A, 11B, 11C; 11x, 11y) when the dye-sensitized solar cell (11; 11a, 11b, 11c; 11A, 11B, 11C; 11x, 11y) is opened, excluding the operating point and the non-operating point.

2. The photovoltaic power generation apparatus (1, 2a, 2A) according to claim 1, wherein a variation range of voltage output by the photovoltaic power generation apparatus is a rated voltage range.

3. The photovoltaic power generation apparatus (2a, 2A) according to any one of claims 1 to 2, wherein a plurality of dye-sensitized solar cells (11a, 11b, 11c; 11A, 11B, 11C; 11x, 11y) is included, and a range between the operating and non-operating points, in which an operating point of one of the dye-sensitized solar cells (11a, 11b, 11c; 11A, 11B, 11C; 11x, 11y) is included and a range between the operating and non-operating points, in which an operating point of another dye-sensitized solar cells (11a, 11b, 11c; 11A, 11B, 11C; 11x, 11y) is included, have an overlapping point.

4. The photovoltaic power generation apparatus (1) according to any one of claims 1 to 3, wherein the dye-sensitized solar cell (11) is or the dye-sensitive cells (11a, 11b, 11c; 11A, 11B, 11C; 11x, 11y) are provided as an independent power supply that supplies power to the sensor (12).

## Patentansprüche

1. Vorrichtung (1, 2a, 2A) zur Erzeugung von Fotovoltaikleistung, aufweisend:
eine farbstoffsensibilisierte Solarzelle (11; 11a, 11b, 11c; 11A, 11B, 11C; 11x, 11y), die Licht in Leistung umwandelt; und
einen Sensor (12), der mit der Leistung arbeitet, wobei der Sensor (12) mit der farbstoffsensibilisierten Solarzelle (11; 11a, 11b, 11c; 11A, 11B, 11C; 11x, 11y) direkt oder indirekt verbunden ist, wobei
der Sensor (12) eine Leistungsverbrauchscharakteristik aufweist, nach der die farbstoffsensibilisierte Solarzelle (11; 11a, 11b, 11c; 11A, 11B, 11C; 11x, 11y) nur in einem Bereich zwischen einem Arbeitspunkt der farbstoffsensibilisierten Solarzelle (11; 11a, 11b, 11c; 11A, 11B, 11C; 11x, 11y), wenn die Leistung maximal ist, und einem Nicht-Arbeitspunkt der farbstoffsensibilisierten Solarzelle (11; 11a, 11b, 11c; 11A, 11B, 11C; 11x, 11y), wenn die farbstoffsensibilisierte Solarzelle (11; 11a, 11b, 11c; 11A, 11B, 11C; 11x, 11y) geöffnet ist, ausgenommen der Arbeitspunkt und der Nicht-Arbeitspunkt arbeitet.

2. Vorrichtung (1, 2a, 2A) zur Erzeugung von Fotovoltaikleistung nach Anspruch 1, wobei ein Variationsbereich einer von der Vorrichtung zur Erzeugung von Fotovoltaikleistung abgegebenen Spannung ein Nennspannungsbereich ist.

3. Vorrichtung (2a, 2A) zur Erzeugung von Fotovoltaikleistung nach einem der Ansprüche 1 bis 2, wobei eine Vielzahl farbstoffsensibilisierter Solarzellen (11a, 11b, 11c; 11A, 11B, 11C; 11x, 11y) enthalten ist und ein Bereich zwischen den Arbeits- und Nicht-Arbeitspunkten, in dem ein Arbeitspunkt einer der farbstoffsensibilisierten Solarzellen (11a, 11b, 11c; 11A, 11B, 11C; 11x, 11y) enthalten ist, und ein Bereich zwischen den Arbeits- und Nicht-Arbeitspunkten, in dem ein Arbeitspunkt anderer farbstoffsensibilisierter Solarzellen (11a, 11b, 11c; 11A, 11B, 11C; 11x, 11y) enthalten ist, einen Überlappungspunkt aufweisen.

4. Vorrichtung (1) zur Erzeugung von Fotovoltaikleistung nach einem der Ansprüche 1 bis 3, wobei als unabhängige Energieversorgung, die dem Sensor (12) Leistung zuführt, die farbstoffsensibilisierte Solarzelle (11) bereitgestellt ist oder die farbstoffsensibilisierten Zellen (11a, 11b, 11c; 11A, 11B, 11C; 11x, 11y) bereitstellt sind.

## Revendications

1. Appareil générateur d'énergie photovoltaïque (1, 2a, 2A), comprenant :
une cellule solaire sensible à colorant (11 ; 11a, 11b, 11c ; 11A, 11B, 11C ; 11x, 11y) qui convertit la lumière en énergie ; et
un capteur (12) qui fonctionne par l'énergie, le capteur (12) étant relié directement ou indirectement à la cellule solaire sensible à colorant (11 ; 11a, 11b, 11c ; 11A, 11B, 11C ; 11x, 11y), dans lequel
le capteur (12) a une caractéristique de consommation d'énergie par laquelle la cellule solaire sensible à colorant (11 ; 11a, 11b, 11c ; 11A, 11B, 11C; 11x, 11y) fonctionne seulement dans une plage entre un point de fonctionnement de la cellule solaire sensible à colorant (11 ; 11a, 11b, 11c ; 11A, 11B, 11C; 11x, 11y) quand l'énergie est maximum et un point de non fonctionnement de la cellule solaire sensible à colorant (11 ; 11a, 11b, 11c ; 11A, 11B, 11C; 11x, 11y) quand la cellule solaire sensible à colorant (11 ; 11a, 11b, 11c ; 11A, 11B, 11C ; 11x, 11y) est ouverte, excluant le point de fonctionnement et le point de non fonctionnement.

2. Appareil générateur d'énergie photovoltaïque (1, 2a, 2A) selon la revendication 1, dans lequel une plage de variation de la tension délivrée par l'appareil générateur d'énergie photovoltaïque est une plage de tension nominale.

3. Appareil générateur d'énergie photovoltaïque (2a, 2A) selon l'une quelconque des revendications 1 à 2, dans lequel une pluralité de cellules solaires sensibles à colorant (11a, 11b, 11c ; 11A, 11B, 11C ; 11x, 11y) sont incluses, et une plage entre les points de fonctionnement et de non fonctionnement, dans laquelle un point de fonctionnement de l'une des cellules solaires sensibles à colorant (11a, 11b, 11c ; 11A, 11B, 11C ; 11x, 11y) est inclus et une plage entre les points de fonctionnement et de non fonctionnement, dans laquelle un point de fonctionnement d'une autre cellule solaire sensible à colorant (11a, 11b, 11c, 11A, 11B, 11C ; 11x, 11y) est inclus, ont un point de chevauchement.

4. Appareil générateur d'énergie photovoltaïque (1) selon l'une quelconque des revendications 1 à 3, dans lequel la cellule solaire sensible à colorant (11) ou les cellules solaires sensibles à colorant (11a, 11b, 11c ; 11A, 11B, 11C; 11x, 11y) est ou sont prévues comme alimentation en énergie indépendante qui alimente le capteur en énergie (12).
